# EUROPÄISCHE PATENTSCHRIFT

(11) **EP 2 686 202 B1**
(45) Veröffentlichungstag und Bekanntmachung des Hinweises auf die Patenterteilung: **02.11.2016**
(21) Anmeldenummer: 12705128.2
(22) Anmeldetag: 20.02.2012
(51) Int. Cl.: B60Q 1/14, F16C 11/04

(54) **LAGERUNGSANORDNUNG EINES LENKSTOCKHEBELS AN EINEM LENKSÄULENTEIL UND KRAFTFAHRZEUG MIT EINER SOLCHEN LAGERUNGSANORDNUNG**
BEARING ARRANGEMENT OF A STEERING DROP ARM ON A STEERING COLUMN PART AND MOTOR VEHICLE WITH A BEARING ARRANGEMENT OF THIS TYPE
ENSEMBLE DE PALIERS D'UN LEVIER DE DIRECTION SUR UNE PARTIE DE COLONNE DE DIRECTION ET VÉHICULE ÉQUIPÉ D'UN ENSEMBLE DE PALIERS DE CE TYPE

(30) Priorität: 17.03.2011 DE 102011014252
(43) Veröffentlichungstag der Anmeldung: 22.01.2014
(73) Patentinhaber: Valeo Schalter und Sensoren GmbH, 74321 Bietigheim-Bissingen (DE)
(72) Erfinder: SIMONIS, Karl, 75428 Illingen (DE); GRUENER, Roland, 71732 Tamm (DE); RADDAZ, Laurent, 74321 Bietigheim-Bissingen (DE); HASCH, Martin, 71701 Schwieberdingen (DE); RAIMONDO, Enrico, 74321 Bietigheim-Bissingen (DE)
(86) Internationale Anmeldenummer: PCT/EP2012/052832
(87) Internationale Veröffentlichungsnummer: WO 2012/123225

(56) Entgegenhaltungen:
- DE-A1- 10 256 785
- DE-A1- 19 540 803
- DE-A1-102004 042 653
- KR-A- 20070 016 103
- US-A1- 2005 269 192

## Beschreibung

Die Erfindung betrifft eine Lagerungsanordnung eines Lenkstockhebels an einem Lenksäulenteil eines Kraftfahrzeugs, bei welchem der Lenkstockhebel an dem Lenksäulenteil zumindest mittelbar über ein Lager schwenkbar gelagert ist. Das Lager weist eine Hauptlagerstelle auf, die durch einen Hauptlagerzapfen und eine korrespondierende Hauptlagerhülse bzw. Hauptlagerschale gebildet ist. Die Erfindung betrifft außerdem ein Kraftfahrzeug mit einer solchen Lagerungsanordnung.

Lagerungsanordnungen für Lenkstockhebel bzw. Lenkstockschalter eines Kraftfahrzeugs sind Stand der Technik. In der Regel werden Kreuzgelenke eingesetzt, die auch unter der Bezeichnung "Kardangelenke" bekannt sind. Der Einsatz eines Kreuzgelenks ermöglicht eine Schwenkbewegung des Lenkstockhebels in zwei Schwenkrichtungen. Dazu wird ein Zwischenelement verwendet: Einerseits ist dieses Zwischenelement an dem Lenksäulenteil schwenkbar gelagert, nämlich in einer ersten Schwenkrichtung; andererseits ist an dem Zwischenelement der eigentliche Lenkstockhebel schwenkbar gelagert, und zwar in einer senkrechten zweiten Richtung.

Bei der Entwicklung einer Lagerungsanordnung bzw. bei der Dimensionierung des Lagers müssen bestimmte Kompromisse getroffen werden: Das Lager muss ausreichend groß und robust dimensioniert sein, damit es die Betätigungskräfte aufnehmen kann, die beim Betätigen des Lenkstockhebels auf die Lagerstelle wirken. Vor allem muss die Lagerungsanordnung in der Lage sein, "Missbrauchskräfte" aufzunehmen, wenn der Benutzer den Lenkstockhebel "mit Gewalt" bzw. mit erhöhten Kräften betätigt. Ist die Hauptlagerstelle - der Hauptlagerzapfen mit seiner korrespondierenden Hauptlagerhülse - entsprechend groß dimensioniert, so muss zwischen dem Hauptlagerzapfen und der korrespondierenden Hauptlagerhülse ein bestimmtes Spiel vorgesehen sein, damit der Lenkstockhebel leicht und ohne viel Aufwand betätigt werden kann. Wäre zwischen dem Hauptlagerzapfen und der Hauptlagerhülse kein Spiel vorhanden, müsste man relativ große Drehmomente aufbringen, um den Lenkstockschalter zu betätigen.

Einerseits muss somit die Hauptlagerstelle entsprechend groß dimensioniert werden, damit relativ große Betätigungskräfte aufgenommen werden können und damit das Lager nicht zerstört werden kann. Andererseits muss es bei der Hauptlagerstelle ein entsprechendes Spiel geben, damit der Lenkstockhebel überhaupt mit zumutbaren Kräften betätigt werden kann. Bedingt durch Toleranzen kann der Lenkstockschalter somit wackeln.

Aus DE19540803A1 ist eine gattungsgemäße Lagerungsanordnung eines Lenkstockhebels an einem Lenksäulenteil eines Kraftfahrzeugs bekannt.

Es ist Aufgabe der Erfindung, eine Lösung aufzuzeigen, wie bei einer Lagerungsanordnung der eingangs genannten Gattung einerseits relativ große Kräfte (etwa Missbrauchskräfte) beim Betätigen des Lenkstockhebels aufgenommen werden können und somit der Lenkstockhebel besonders robust aufgebaut werden kann und andererseits auch eine gefühlte Hochwertigkeit des Lenkstockhebels sichergestellt werden kann.

Diese Aufgabe wird erfindungsgemäß durch eine Lagerungsanordnung mit den Merkmalen gemäß Patentanspruch 1 gelöst, wie auch durch ein Kraftfahrzeug mit den Merkmalen des Patentanspruchs 8. Vorteilhafte Ausführungen der Erfindung sind Gegenstand der abhängigen Patentansprüche, der Beschreibung und der Figuren.

Bei einer erfindungsgemäßen Lagerungsanordnung eines Lenkstockhebels an einem Lenksäulenteil eines Kraftfahrzeugs ist der Lenkstockhebel an dem Lenksäulenteil zumindest mittelbar über ein Lager schwenkbar gelagert. Das Lager beinhaltet eine Hauptlagerstelle, welche durch einen Hauptlagerzapfen sowie eine korrespondierende Hauptlagerhülse gebildet ist. Erfindungsgemäß weist das Lager auch einen bezüglich des Hauptlagerzapfens koaxial bzw. konzentrisch angeordneten zusätzlichen Lagerzapfen auf, nämlich insbesondere mit einem gegenüber dem Hauptlagerzapfen geringeren Durchmesser. Durch den zusätzlichen Lagerzapfen und eine korrespondierende zusätzliche Lagerhülse bzw. Lagerschale ist eine zusätzliche Lagerstelle des Lagers gebildet. Es ist vorgesehen, dass (in radialer und/oder axialer Richtung) die Hauptlagerstelle spielbehaftet und die zusätzliche Lagerstelle spielfrei ausgebildet ist. Dies bedeutet, dass der Hauptlagerzapfen und die Hauptlagerhülse zueinander spielbehaftet sind, während die zusätzliche Lagerhülse und der zusätzliche Lagerzapfen spielfrei zueinander ausgeführt sind.

Also wird der erfindungsgemäße Effekt dadurch erzielt, dass neben der Hauptlagerstelle auch eine zusätzliche Lagerstelle bereitgestellt ist, welche durch einen zusätzlichen Lagerzapfen - insbesondere mit einem geringeren Durchmesser - sowie eine korrespondierende zusätzliche Lagerhülse gebildet ist. Die Hauptlagerstelle - mit dem Hauptlagerzapfen und der Hauptlagerhülse - kann somit aufgrund des relativ großen Durchmessers hohe Betätigungskräfte aufnehmen, sodass der Lenkstockschalter besonders robust ist bzw. hohen Missbrauchskräften standhalten kann. Auf der anderen Seite kann die zusätzliche Lagerstelle - mit dem zusätzlichen Lagerzapfen und der zusätzlichen Lagerhülse - spielfrei ausgeführt werden und sorgt somit für die gefühlte Hochwertigkeit des Lenkstockschalters. Wird die zusätzliche Lagerstelle mit einem geringeren Durchmesser ausgebildet, so hat man den Vorteil, dass keine hohen Drehmomente aufgebracht werden müssen, damit der Lenkstockhebel betätigt werden kann. Die Reibmomente an der zusätzlichen Lagerstelle sind nämlich aufgrund des geringeren Durchmessers vernachlässigbar klein, und der Benutzer kann den Lenkstockhebel somit ohne viel Aufwand betätigen. Die Lagerkräfte werden nur so lange von der zusätzlichen Lagerstelle aufgenommen, bis die Spielpassung in der Hauptlagerstelle überwunden ist und letztere die Stützfunktion übernimmt. Mit der erfindungsgemäßen Lagerungsanordnung kann kostenneutral, trotz gröberer Toleranzen, immer eine 100% spielfreie Lagerung bereitgestellt werden, welche die gefühlte Hochwertigkeit des Lenkstockschalters sicherstellt.

Also ist die zusätzliche Lagerstelle spielfrei ausgeführt, während die Hauptlagerstelle spielbehaftet ist. Die Vorteile der Erfindung kommen dann vollständig zum Tragen, wenn der zusätzliche Lagerzapfen bzw. Lagerbolzen einen gegenüber dem Hauptlagerzapfen geringeren Durchmesser aufweist. Einerseits ist somit die gefühlte Hochwertigkeit des Lenkstockhebels sichergestellt, denn es ist kein Spiel in der zusätzlichen Lagerstelle vorhanden; andererseits kann somit der Lenkstockhebel besonders zuverlässig und ohne viel Aufwand bzw. mit geringen Drehmomenten betätigt werden, denn die Reibmomente, die hier entstehen, sind aufgrund des geringeren Durchmessers besonders klein.

Es erweist sich als besonders vorteilhaft, wenn der zusätzliche Lagerzapfen mit der zusätzlichen Lagerhülse elastisch zusammenwirkt. Also kann die zusätzliche Lagerstelle eine elastische Lagerstelle sein, bei welcher eine elastische Verformung mindestens eines Lagerpartners zugelassen ist. Diese Ausführungsform hat den Vorteil, dass die Betätigungskräfte nur so lange auf die zusätzliche (kleine) Lagerstelle wirken, bis ein entsprechendes Drehmoment erreicht ist und das Spiel in der Hauptlagerstelle überwunden ist. Dann übernimmt die Hauptlagerstelle ihre eigentliche Stützfunktion, und die gesamten Betätigungskräfte können durch die Hauptlagerstelle aufgenommen werden. Es wird somit eine Zerstörung der Lagerungsanordnung verhindert, nämlich insbesondere der zusätzlichen Lagerstelle einschließlich des zusätzlichen Lagerzapfens und der zusätzlichen Lagerhülse.

Die Elastizität der zusätzlichen Lagerstelle kann auf unterschiedlichste Art und Weisen verwirklicht werden: Zum einen kann der zusätzliche Lagerzapfen und/oder die zusätzliche Lagerhülse ein aus einem elastischen Material - zum Beispiel aus Gummi - ausgebildetes Element aufweisen, welches sich beim Zusammenwirken mit dem Lagerpartner elastisch verformen kann. Zum anderen - ergänzend oder alternativ - kann die zusätzliche Lagerhülse mit zumindest einem Schlitz versehen sein, der zu einem dem zusätzlichen Lagerzapfen zugewandten Umfang der Lagerhülse hin offen ausgebildet ist. Der zumindest eine Schlitz kann sich in radialer Richtung erstrecken. Der Schlitz sorgt dann für eine elastische Verformung der zusätzlichen Lagerhülse. Beispielsweise können zwei oder drei oder vier Schlitze vorgesehen sein, die sich jeweils von dem Umfang der Lagerhülse radial nach außen hin erstrecken. Bei der Ausführungsform mit dem zumindest einen Schlitz kann die zusätzliche Lagerhülse sogar vollständig aus Kunststoff ausgeführt sein; auch der zusätzliche Lagerzapfen kann aus Kunststoff ausgeführt sein.

Erfindungsgemäß schließt sich der zusätzliche Lagerzapfen in axialer Richtung unmittelbar an den Hauptlagerzapfen an. Beispielsweise kann der zusätzliche Lagerzapfen als ein Fortsatz des Hauptlagerzapfens ausgebildet sein. Die zusätzliche Lagerstelle kann somit unmittelbar neben der Hauptlagerstelle liegen. Dies hat den Vorteil, dass das Lager insgesamt besonders kompakt aufgebaut werden kann. Auf der anderen Seite wird somit eine zuverlässige Übertragung der Kräfte auf die Hauptlagerstelle gewährleistet, und die zusätzliche Lagerstelle wird vor einer Zerstörung geschützt.

Bei einer besonders stabilen und robusten Lagerungsanordnung sind der Hauptlagerzapfen und der zusätzliche Lagerzapfen einstückig ausgebildet bzw. einstückig miteinander verbunden.

Vorzugsweise ist der Lenkstockhebel über ein Kreuzgelenk (Kardangelenk) an den Lenksäulenteil angelenkt. Das Kreuzgelenk weist bevorzugt ein Zwischenelement auf, welches einerseits an dem Lenksäulenteil schwenkbar gelagert ist, nämlich in einer ersten Schwenkrichtung; andererseits kann an dem Zwischenelement der eigentliche Lenkstockhebel schwenkbar gelagert sein, nämlich insbesondere in einer zur ersten Schwenkrichtung senkrechten zweiten Schwenkrichtung. Es ist insbesondere das Zwischenelement des Kreuzgelenks, welches über das genannte Lager einschließlich der Hauptlagerstelle und der zusätzlichen Lagerstelle an dem Lenksäulenteil schwenkbar gelagert ist. Ergänzend oder alternativ kann jedoch auch vorgesehen sein, dass der eigentliche Lenkstockhebel an dem Zwischenelement über ein solches Lager mit einer Hauptlagerstelle und einer zusätzlichen Lagerstelle schwenkbar gelagert ist.

Die Lagerungsanordnung kann neben dem oben genannten (ersten) Lager auch ein zum ersten Lager konzentrisch bzw. koaxial angeordnetes zweites Lager aufweisen. Auch das zweite Lager kann eine Hauptlagerstelle beinhalten, welche durch einen Hauptlagerzapfen und eine korrespondierende Hauptlagerhülse bzw. Hauptlagerschale gebildet ist. Eine zusätzliche Lagerstelle des zweiten Lagers kann - wie beim ersten Lager - durch einen bezüglich des Hauptlagerzapfens koaxial angeordneten zusätzlichen Lagerzapfen mit einem geringeren Durchmesser sowie eine zusätzliche Lagerhülse gebildet sein. Für die Lagerung des Lenkstockhebels an dem Lenksäulenteil sind bei dieser Ausführungsform also zwei separate, koaxiale, gegenüberliegende, und insbesondere entgegengesetzte Lager vorgesehen, die jeweils über eine genannte Hauptlagerstelle sowie eine zusätzliche Lagerstelle verfügen. Somit ist die Lagerungsanordnung besonders stabil.

Der Einsatz eines zweiten Lagers mit einer entsprechenden zusätzlichen Lagerstelle ermöglicht auch die Bereitstellung einer Lagerungsanordnung, welche sowohl in radialer als auch in axialer Richtung spielfrei ausgebildet ist. Zum Beispiel kann das erste Lager für eine Spielfreiheit in radialer Richtung sorgen, während das zweite Lager für eine Spielfreiheit in axialer Richtung sorgen kann: Der zusätzliche Lagerzapfen des ersten Lagers kann an der zusätzlichen Lagerhülse desselben Lagers radial, spielfrei abgestützt sein, sodass die zusätzliche Lagerstelle des ersten Lagers und somit die gesamte Lagerungsanordnung in radialer Richtung spielfrei ausgebildet ist. Demgegenüber kann der zusätzliche Lagerzapfen des zweiten Lagers an der zusätzlichen Lagerhülse des zweiten Lagers im Wesentlichen axial abgestützt sein, sodass die zusätzliche Lagerstelle des zweiten Lagers und somit auch die gesamte Lagerungsanordnung in axialer Richtung spielfrei ausgeführt sind. Es kann somit eine besonders hochwertige Lagerungsanordnung geschaffen werden, bei welcher sowohl in radialer Richtung als auch in axialer Richtung überhaupt kein Spiel vorhanden ist und somit auch keine Wackelbewegung hervorgerufen werden kann.

Die beiden Lager sind bevorzugt derart relativ zueinander angeordnet, dass die jeweiligen zusätzlichen Lagerzapfen in Richtung zueinander weisen bzw. zeigen. Auch die jeweiligen Hauptlagerzapfen weisen somit in Richtung zueinander.

Die Erfindung betrifft auch ein Kraftfahrzeug, welches eine erfindungsgemäße Lagerungsanordnung aufweist. Die mit Bezug auf die erfindungsgemäße Lagerungsanordnung vorgestellten bevorzugten Ausführungsformen und deren Vorteile gelten entsprechend für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer und perspektivischer Darstellung ein Lenksäulenteil einer Lagerungsanordnung gemäß einer Ausführungsform der Erfindung;
- Fig. 2A und 2B: in schematischer und perspektivischer Darstellung das Lenksäulenteil mit einem daran gelagerten Zwischenelement eines Kreuzgelenks;
- Fig. 3: in schematischer und perspektivischer Darstellung das Zwischenelement des Kreuzgelenks;
- Fig. 4: in schematischer und perspektivischer Darstellung ein Hauptlagerzapfen und ein zusätzlicher Lagerzapfen eines Lagers; und
- Fig. 5: in schematischer Darstellung eine Schnittansicht durch die Lagerungsanordnung mit einem ersten Lager und einem gegenüberliegenden zweiten Lager.

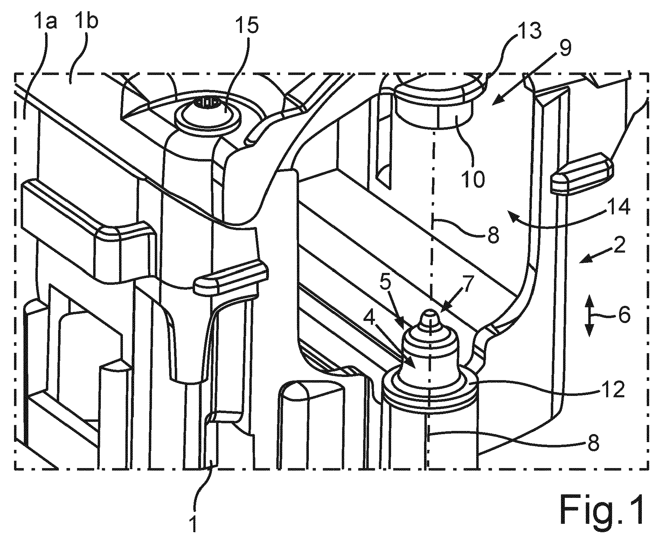

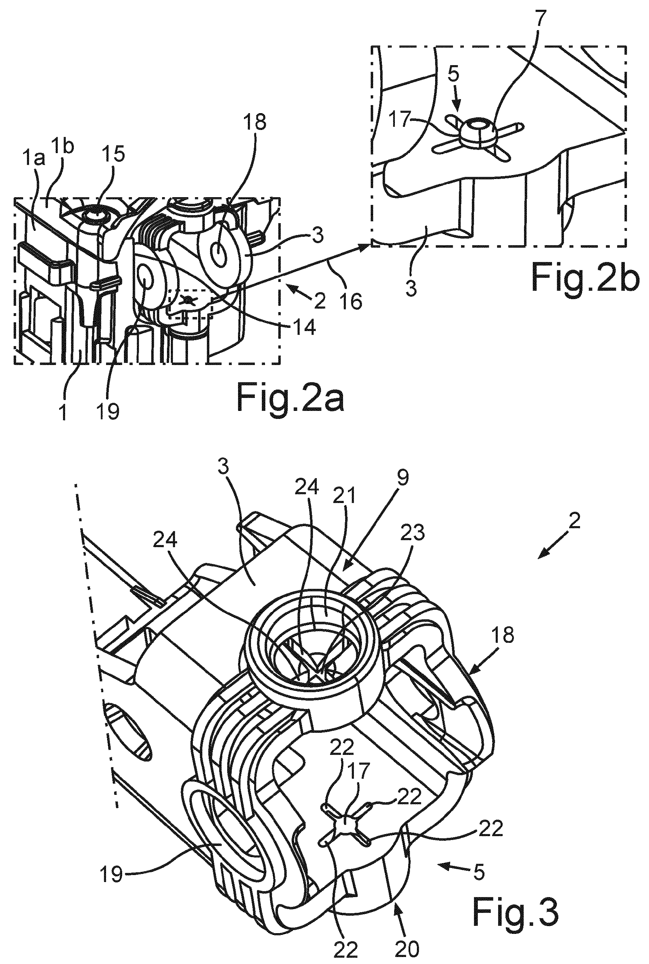

In Fig. 1 ist in schematischer Darstellung ein Lenksäulenteil 1 in Form eines Gehäuses dargestellt, welches Bestandteil einer Lagerungsanordnung 2 gemäß einer Ausführungsform der Erfindung ist. Das Lenksäulenteil 1 ist Bestandteil einer Lenksäule eines Kraftfahrzeugs, etwa eines Personenkraftwagens. Das Lenksäulenteil 1 ist hier in Form eines Gehäuses ausgeführt und zum Lagern eines in Fig. 1 nicht dargestellten Zwischenelements 3 (siehe Fig. 2) eines Kreuzgelenks ausgebildet.

An dem Lenksäulenteil 1 ist ein Hauptlagerzapfen bzw. Hauptlagerbolzen 4 eines ersten Lagers 5 ausgebildet, welcher in eine korrespondierende Hauptlagerhülse bzw. Hauptlagerschale des Zwischenelements 3 aufgenommen werden kann. An den Hauptlagerzapfen 4 schließt sich in axialer Richtung (Pfeildarstellung 6) unmittelbar ein zusätzlicher Lagerzapfen 7 des ersten Lagers 5 an. Der zusätzliche Lagerzapfen 7 ist hier als ein axialer Fortsatz des Hauptlagerzapfens 4 ausgebildet. Der zylindrische zusätzliche Lagerzapfen 7 weist einen geringeren Durchmesser als der Hauptlagerzapfen 4 auf. Sowohl der Hauptlagerzapfen 4 als auch der koaxiale, von einer Stirnseite des Hauptlagerzapfens 4 axial abstehende zusätzliche Lagerzapfen 7 sind zylindrische bzw. zylinderförmige Körper, sodass das erste Lager 5 ein Schwenklager ist bzw. das Zwischenelement 3 des Kreuzgelenks über das Lager 5 schwenkbar an dem Lenksäulenteil 1 gelagert werden kann, nämlich um eine Schwenkachse 8.

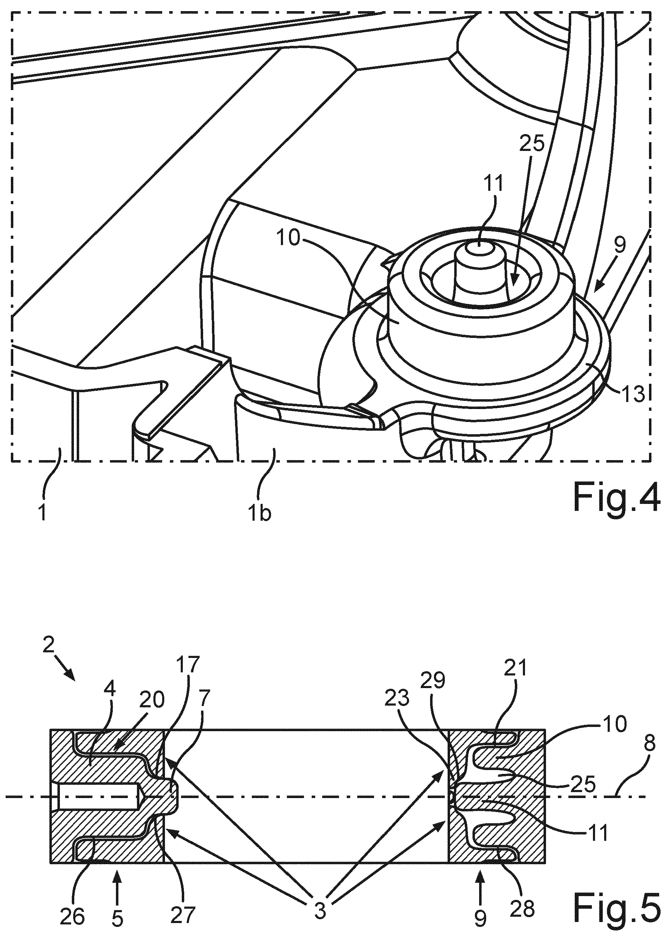

Gegenüber dem ersten Lager 5 befindet sich ein konzentrisches zweites Lager 9, welches ebenfalls einen Hauptlagerzapfen 10 aufweist, der in Richtung zum ersten Lager 5 in axialer Richtung zeigt. Das zweite Lager 9 beinhaltet ebenfalls einen in seinem Durchmesser kleineren zusätzlichen Lagerzapfen 11 (Fig. 4), welcher in Fig. 1 nicht dargestellt ist. Das Zwischenelement 3 des Kreuzgelenks kann somit beidseitig an dem Lenksäulenteil 1 über die beiden Lager 5, 9 um die Schwenkachse 8 beweglich gelagert werden. Im montierten Zustand des Zwischenelements 3 - wie in Fig. 2 dargestellt ist - liegt das Zwischenelement 3 zwischen einem Anschlag 12 des ersten Lagers 5 und einem Anschlag 13 des zweiten Lagers 9. Das Zwischenelement 3 kann dabei in eine Aufnahme 14 aufgenommen werden, die im Lenksäulenteil 1 ausgebildet ist, nämlich zwischen zwei Gehäusehälften 1 a, 1 b. Diese beiden Gehäusehälften 1 a, 1 b können beispielsweise mithilfe einer Schraubenverbindung miteinander verbunden sein, etwa mittels einer Schraube 15.

In Fig. 2A ist die Lagerungsanordnung 2 im montierten Zustand des Zwischenelements 3 des Kreuzgelenks dargestellt. Gezeigt ist das Lenksäulenteil 1, und zwar aus derselben Blickrichtung wie in Fig. 1, wobei das Zwischenelement 3 bereichsweise in die Aufnahme 14 des Lenksäulenteils 1 aufgenommen ist. Wie mithilfe der Pfeildarstellung 16 dargestellt ist, ist in Fig. 2B ein Bereich der Lagerungsanordnung 2 vergrößert dargestellt.

Wie bereits ausgeführt, weist das Zwischenelement 3 korrespondierende Lagerschalen auf, nämlich eine Hauptlagerhülse zur Aufnahme des Hauptlagerzapfens 4 des ersten Lagers 5, wie auch eine kleinere zusätzliche Lagerhülse 17 zur Aufnahme des zusätzlichen Lagerzapfens 7. Im montierten Zustand des Zwischenelements 3 erstreckt sich der zusätzliche Lagerzapfen 7 durch die zusätzliche Lagerhülse 17 hindurch und ragt aus dieser zusätzlichen Lagerhülse 17 heraus, sodass sich ein kleiner Bereich bzw. das freie Ende des zusätzlichen Lagerzapfens 7 über die Oberfläche des Zwischenelements 3 erhebt. Dies ist in Fig. 2B eindeutig erkennbar.

Bezugnehmend weiterhin auf Fig. 2A weist das Zwischenelement 3 außerdem zwei Lagerschalen 18, 19 auf, in welche korrespondierende Lagerbolzen eines in den Figuren nicht dargestellten Lenkstockhebels bzw. Lenkstockschalters aufgenommen werden können. An dem Zwischenelement 3 kann also ein Lenkstockhebel schwenkbar gelagert werden, und zwar um eine senkrecht zur Schwenkachse 8 (Fig. 1) verlaufende Schwenkachse.

Das Zwischenelement 3 des Kreuzgelenks ist in Fig. 3 im Detail abgebildet. Es weist eine Hauptlagerhülse 20, welche Bestandteil des ersten Lagers 5 ist, wie auch eine weitere Hauptlagerhülse 21 auf, welche zum zweiten Lager 9 gehört. In die Hauptlagerhülsen 20, 21 können die korrespondierenden Hauptlagerzapfen 4 bzw. 10 aufgenommen werden, wie sie in Fig. 1 dargestellt sind. An die Hauptlagerhülse 20 schließt sich in axialer Richtung die konzentrische zusätzliche Lagerhülse 17 an, welche zur Aufnahme des zusätzlichen Lagerzapfens 7 ausgebildet ist. Im Zwischenelement 3 sind außerdem im Ausführungsbeispiel vier Schlitze 22 ausgebildet, die sich von der zusätzlichen Lagerhülse 17 radial nach außen hin erstrecken und insgesamt die Form eines Kreuzes einnehmen. Die Schlitze 22 sind zur zusätzlichen Lagerhülse 17 hin offen ausgebildet.

Entsprechend schließt sich auch an die Hauptlagerhülse 21 des zweiten Lagers 9 eine konzentrisch dazu angeordnete zusätzliche Lagerhülse 23 an, welche ebenfalls durch vier Schlitze 24 umgeben ist. In die zusätzliche Lagerhülse 23 des zweiten Lagers 9 kann der korrespondierende zusätzliche Lagerzapfen 11 (Fig. 4) aufgenommen werden. In Fig. 4 sind der Hauptlagerzapfen 10 sowie der zusätzliche Lagerzapfen 11 des zweiten Lagers 9 gezeigt. Wie aus Fig. 4 hervorgeht, weist der zusätzliche Lagerzapfen 11 einen gegenüber dem Hauptlagerzapfen 10 deutlich geringeren Durchmesser auf. Anders als beim ersten Lager 5 weist der Hauptlagerzapfen 10 des zweiten Lagers 9 eine axiale Aufnahme 25 auf, in welcher der zusätzliche Lagerzapfen 11 angeordnet ist. Der zusätzliche Lagerzapfen 11 erstreckt sich durch die axiale Aufnahme 25 und ragt aus dem Hauptlagerzapfen 10 heraus, nämlich in axialer Richtung bzw. in Richtung der Schwenkachse 8 (Fig. 1). Dabei reicht der zusätzliche Lagerzapfen 11 in axialer Richtung ein Stück weiter als der Hauptlagerzapfen 10.

In Fig. 5 ist eine Schnittansicht der Lagerungsanordnung 2 entlang der Schwenkachse 8 gemäß Fig. 1 dargestellt. Gezeigt sind hier das erste Lager 5, wie auch das zweite Lager 9. Das erste Lager 5 beinhaltet eine erste Lagerstelle 26 sowie eine zweite Lagerstelle 27. Die erste Lagerstelle 26 ist durch den Hauptlagerzapfen 4 einerseits sowie durch die Hauptlagerhülse 20 des Zwischenelements 3 gebildet. Entsprechend ist die zusätzliche Lagerstelle 27 durch den zusätzlichen Lagerzapfen 7 gebildet, wie auch durch die zusätzliche Lagerhülse 17 im Zwischenelement 3. Wie aus Fig. 5 hervorgeht, erstreckt sich der zusätzliche Lagerzapfen 7 durch die zusätzliche Lagerhülse 17 hindurch und ragt aus dieser heraus, nämlich nach außen in axialer Richtung. Während die Hauptlagerstelle 26 spielbehaftet ist, ist die zusätzliche Lagerstelle 27 spielfrei ausgeführt. Dabei ist der zusätzliche Lagerzapfen 7 an der zusätzlichen Lagerhülse 27 radial abgestützt, sodass das erste Lager 5 für eine in radialer Richtung spielfreie Lagerungsanordnung 2 sorgt.

Demgegenüber weist das zweite Lager 9 - wie bereits ausgeführt - einen Hauptlagerzapfen 10 auf, wie auch den zusätzlichen Lagerzapfen 11, welcher aus der axialen Aufnahme 25 im Hauptlagerzapfen 10 in axialer Richtung herausragt. Auch das zweite Lager 9 beinhaltet eine Hauptlagerstelle 28 sowie eine zusätzliche Lagerstelle 29. Die Hauptlagerstelle 28 ist durch den Hauptlagerzapfen 10 einerseits sowie durch die Hauptlagerhülse 21 andererseits gebildet. Diese Hauptlagerstelle 28 ist dabei spielbehaftet, ähnlich wie die Hauptlagerstelle 26 des ersten Lagers 5. Die zusätzliche Lagerstelle 29 des zweiten Lagers 9 ist durch den zusätzlichen Lagerzapfen 11 sowie durch die zusätzliche Lagerhülse 23 im Zwischenelement 3 gebildet. Anders als beim ersten Lager 5 ist hier der zusätzliche Lagerzapfen 11 an der zusätzlichen Lagerhülse 23 nicht oder nicht nur radial, sondern axial abgestützt. Diese zusätzliche Lagerstelle ist auch spielfrei ausgebildet, sodass das zweite Lager 9 für eine Spielfreiheit in axialer Richtung sorgt.

Sowohl die zusätzliche Lagerstelle 27 des ersten Lagers als auch die zusätzliche Lagerstelle 29 des zweiten Lagers 9 sind als elastische Lagerstellen ausgebildet. Es ist somit eine elastische Verformung zumindest eines der Lagerpartner zugelassen, also der zusätzlichen Lagerzapfen 7, 11 und/oder der zusätzlichen Lagerhülsen 17, 23. Prinzipiell kann hier vorgesehen sein, dass die zusätzlichen Lagerzapfen 7, 11 und/oder die zusätzlichen Lagerhülsen 17, 23 zumindest bereichsweise aus einem elastischen Material - etwa aus Gummi - ausgebildet sind. Alternativ können die zusätzlichen Lagerzapfen 7, 11 und/oder die zusätzlichen Lagerhülsen 17, 23 vollständig aus Kunststoff oder einem anderen festen Material ausgebildet sein; in diesem Fall wird die Elastizität der zusätzlichen Lagerstellen 27, 29 durch die kreuzförmigen Schlitze 22 bzw. 24 gewährleistet.

Insgesamt wird eine Lagerungsanordnung 2 eines Lenkstockhebels an einem Lenksäulenteil 1 bereitgestellt, welche einerseits besonders hochwertig und andererseits auch robust ist. Durch die Hauptlagerstellen 26, 28 können hohe Betätigungskräfte aufgenommen werden; auf der anderen Seite sorgen die kleineren zusätzlichen Lagerstellen 27, 29 für eine spielfreie Lagerungsanordnung 2 und somit für die gefühlte Hochwertigkeit des Lenkstockschalters.

## Patentansprüche

1. Lagerungsanordnung (2) eines Lenkstockhebels an einem Lenksäulenteil (1) eines Kraftfahrzeugs, bei welcher der Lenkstockhebel an dem Lenksäulenteil (1) zumindest mittelbar über ein Lager (5, 9) schwenkbar gelagert ist, welches eine Hauptlagerstelle (26, 28) aufweist, die durch einen Hauptlagerzapfen (4, 10) und eine korrespondierende Hauptlagerhülse (20, 21) gebildet ist,
**dadurch gekennzeichnet, dass**
das Lager (5, 9) eine bezüglich der Hauptlagerstelle (26, 28) konzentrisch angeordnete zusätzliche Lagerstelle (27, 29) aufweist, welche durch einen sich in axialer Richtung unmittelbar an den Hauptlagerzapfen (4, 10) anschließenden zusätzlichen Lagerzapfen (7, 11) und eine korrespondierende zusätzliche Lagerhülse (17, 23) gebildet ist, wobei die Hauptlagerstelle (26, 28) spielbehaftet und die zusätzliche Lagerstelle (27, 29) spielfrei ausgebildet sind.

2. Lagerungsanordnung (2) nach Anspruch 1,
**dadurch gekennzeichnet, dass**
der zusätzliche Lagerzapfen (7, 11) gegenüber dem Hauptlagerzapfen (4, 10) einen geringeren Durchmesser aufweist.

3. Lagerungsanordnung (2) nach Anspruch 1 oder 2,
**dadurch gekennzeichnet, dass**
der zusätzliche Lagerzapfen (7, 11) mit der zusätzlichen Lagerhülse (17, 23) elastisch zusammenwirkt.

4. Lagerungsanordnung (2) nach einem der vorhergehenden Ansprüche,
**dadurch gekennzeichnet, dass**
der Hauptlagerzapfen (4, 10) und der zusätzliche Lagerzapfen (7, 11) einstückig ausgebildet sind.

5. Lagerungsanordnung (2) nach einem der vorhergehenden Ansprüche,
**dadurch gekennzeichnet, dass**
über ein Kreuzgelenk der Lenkstockhebel an dem Lenksäulenteil (1) angelenkt ist, wobei ein Zwischenelement (3) des Kreuzgelenks über das Lager (5, 9) an dem Lenksäulenteil (1) gelagert ist.

6. Lagerungsanordnung (2) nach einem der vorhergehenden Ansprüche,
**gekennzeichnet durch**
ein zum ersten Lager (5, 9) konzentrisch angeordnetes zweites Lager (5, 9), welches eine Hauptlagerstelle (26, 28), die **durch** einen Hauptlagerzapfen (4, 10) und eine korrespondierende Hauptlagerhülse (20, 21) gebildet ist, und eine zusätzliche Lagerstelle (27, 29) aufweist, welche **durch** einen bezüglich des Hauptlagerzapfens (4, 10) koaxial angeordneten zusätzlichen Lagerzapfen (7, 11) mit einem gegenüber dem Hauptlagerzapfen (4, 10) geringeren Durchmesser und eine korrespondierende zusätzliche Lagerhülse (17, 23) gebildet ist.

7. Lagerungsanordnung (2) nach Anspruch 6,
**dadurch gekennzeichnet, dass**
- der zusätzliche Lagerzapfen (7) des ersten Lagers (5) an der zusätzlichen Lagerhülse (17) des ersten Lagers (5) radial abgestützt ist und hierdurch die zusätzliche Lagerstelle (27) des ersten Lagers (5) in radialer Richtung spielfrei ausgebildet ist und
- der zusätzliche Lagerzapfen (11) des zweiten Lagers (9) an der zusätzlichen Lagerhülse (23) des zweiten Lagers (9) axial abgestützt ist und hierdurch die zusätzliche Lagerstelle (29) des zweiten Lagers (9) in axialer Richtung spielfrei ausgebildet ist.

8. Kraftfahrzeug mit einer Lagerungsanordnung (2) nach einem der vorhergehenden Ansprüche.

## Claims

1. Bearing assembly (2) of a steering column lever on a steering column part (1) of a motor vehicle, wherein the steering column lever is mounted on the steering column part (1) pivotably at least indirectly via a bearing (5, 9) having a main bearing point (26, 28) which is formed by a main bearing journal (4, 10) and a corresponding main bearing sleeve (20, 21), **characterized in that** the bearing (5, 9) has an additional bearing point (27, 29) which is arranged concentrically in relation to the main bearing point (26, 28) and is formed by an additional bearing journal (7, 11) which lies directly adjacent to the main bearing journal (4, 10) in the axial direction and a corresponding additional bearing sleeve (17, 23), wherein the main bearing point (26, 28) is formed with play and the additional bearing point (27, 29) without play.

2. Bearing assembly (2) according to Claim 1, **characterized in that** the additional bearing journal (7, 11) has a smaller diameter than the main bearing journal (4, 10).

3. Bearing assembly (2) according to Claim 1 or 2, **characterized in that** the additional bearing journal (7, 11) cooperates elastically with the additional bearing sleeve (17, 23).

4. Bearing assembly (2) according to any of the preceding claims, **characterized in that** the main bearing journal (4, 10) and the additional bearing journal (7, 11) are formed integrally.

5. Bearing assembly (2) according to any of the preceding claims, **characterized in that** the steering column lever is mounted pivotably on the steering column part (1) via a universal joint, wherein an intermediate element (3) of the universal joint is mounted on the steering column part (1) via the bearing (5, 9).

6. Bearing assembly (2) according to any of the preceding claims, **characterized by** a second bearing (5, 9) which is arranged concentrically to the first bearing (5, 9) and has a main bearing point (26, 28) which is formed by a main bearing journal (4, 10) and a corresponding main bearing sleeve (20, 21), and an additional bearing point (27, 29) which is formed by an additional bearing journal (7, 11), arranged coaxially in relation to the main bearing journal (4, 10) and with a smaller diameter than the main bearing journal (4, 10), and by a corresponding additional bearing sleeve (17, 23).

7. Bearing assembly (2) according to Claim 6, **characterized in that**
- the additional bearing journal (7) of the first bearing (5) is supported radially on the additional bearing sleeve (17) of the first bearing (5) and thus the additional bearing point (27) of the first bearing (5) is formed play-free in the radial direction, and
- the additional bearing journal (11) of the second bearing (9) is supported axially on the additional bearing sleeve (23) of the second bearing (9) and thus the additional bearing point (29) of the second bearing (9) is formed play-free in the axial direction.

8. Motor vehicle with a bearing assembly (2) according to any of the preceding claims.

## Revendications

1. Agencement de palier (2) d'un levier de direction sur une partie de colonne de direction (1) d'un véhicule automobile, dans lequel le levier de direction est supporté sur la partie de colonne de direction (1) de manière pivotante et au moins indirecte par le biais d'un palier (5, 9) qui présente un point de palier principal (26, 28) qui est formé par un tourillon de palier principal (4, 10) et par une douille de palier principale correspondante (20, 21),
**caractérisé en ce que**
le palier (5, 9) présente un point de palier supplémentaire (27, 29) disposé concentriquement par rapport au point de palier principal (26, 28), lequel est formé par un tourillon de palier supplémentaire (7, 11) se raccordant dans la direction axiale directement au tourillon de palier principal (4, 10) et par une douille de palier supplémentaire correspondante (17, 23), le point de palier principal (26, 28) étant réalisé avec un jeu et le point de palier supplémentaire (27, 29) étant réalisé sans jeu.

2. Agencement de palier (2) selon la revendication 1,
**caractérisé en ce que**
le tourillon de palier supplémentaire (7, 11) présente un plus petit diamètre par rapport au tourillon de palier principal (4, 10).

3. Agencement de palier (2) selon la revendication 1 ou 2,
**caractérisé en ce que**
le tourillon de palier supplémentaire (7, 11) coopère élastiquement avec la douille de palier supplémentaire (17, 23).

4. Agencement de palier (2) selon l'une quelconque des revendications précédentes,
**caractérisé en ce que**
le tourillon de palier principal (4, 10) et le tourillon de palier supplémentaire (7, 11) sont réalisés d'une seule pièce.

5. Agencement de palier (2) selon l'une quelconque des revendications précédentes,
**caractérisé en ce que**
le levier de direction est articulé à la partie de colonne de direction (1) par le biais d'un joint à croisillons, un élément intermédiaire (3) du joint à croisillons étant supporté par le biais du palier (5, 9) sur la partie de colonne de direction (1).

6. Agencement de palier (2) selon l'une quelconque des revendications précédentes,
**caractérisé par**
un deuxième palier (5, 9) disposé concentriquement par rapport au premier palier (5, 9), lequel présente un point de palier principal (26, 28) qui est formé par un tourillon de palier principal (4, 10) et une douille de palier principale correspondante (20, 21), et un point de palier supplémentaire (27, 29) qui est formé par un tourillon de palier supplémentaire (7, 11) disposé coaxialement par rapport au tourillon de palier principal (4, 10) et ayant un diamètre inférieur par rapport au tourillon de palier principal (4, 10) et une douille de palier supplémentaire correspondante (17, 23).

7. Agencement de palier (2) selon la revendication 6, **caractérisé en ce que**
- le tourillon de palier supplémentaire (7) du premier palier (5) est supporté radialement sur la douille de palier supplémentaire (17) du premier palier (5) et de ce fait le point de palier supplémentaire (27) du premier palier (5) est réalisé sans jeu dans la direction radiale et
- le tourillon de palier supplémentaire (11) du deuxième palier (9) est supporté axialement sur la douille de palier supplémentaire (23) du deuxième palier (9) et de ce fait le point de palier supplémentaire (29) du deuxième palier (9) est réalisé sans jeu dans la direction axiale.

8. Véhicule automobile comprenant un agencement de palier (2) selon l'une quelconque des revendications précédentes.
